# EUROPEAN PATENT APPLICATION

(11) **EP 1 329 296 A2**
(43) Date of publication of application: **23.07.2003**
(21) Application number: 03000867.6
(22) Date of filing: 15.01.2003
(51) Int. Cl.: B27M 3/18, B23P 19/02, B23P 21/00

(54) **Automated apparatus for assembling furnishing elements and relative assembly method**

(30) Priority: 16.01.2002 IT UD20020006
(71) Applicant: Sfiligoi, Gianni, 33044 Manzano (UD) (IT); Zamaro, Marcello, 33044 Manzano (UD) (IT)
(72) Inventor: Sfiligoi, Gianni, 33044 Manzano (UD) (IT); Zamaro, Marcello, 33044 Manzano (UD) (IT)
(74) Representative: Petraz, Gilberto Luigi

(57) **Abstract**

Automated apparatus (10) for assembling constructional components of a furnishing element and relative method of assembly; the automated apparatus (10) comprises at least a first machine (11) provided with first thrust members (32, 33) which act in a first direction on a first part (16, 18, 19) of the constructional components, and second thrust members (43, 44) which act in a second direction, angled with respect to the first direction, on a second part (14, 15) of the components. The first thrust members comprise two first supporting means (32, 33) able to slide simultaneously in reciprocally opposite directions, by means of a first movement assembly (38).

## Description

### FIELD OF THE INVENTION

The present invention concerns an automated apparatus, or work block, comprising two machines for assembling components of furnishing elements, such as chairs or suchlike. Each machine is able to operate on defined parts of the frame of the furnishing element to be assembled. To be more exact, in the case of a chair, a first machine operates automatically on the two front legs with the respective transversal strips, so as to make a front half-frame, while the other machine achieves the total assembly both of the back rest with the respective cross-pieces, and of the latter with the front half-frame, already preassembled by the first automatic machine.

### BACKGROUND OF THE INVENTION

The state of the art includes many types of machines for the automatic assembly of chairs, the so-called "clamping machines". Generally speaking, they work on one plane, preferentially horizontal, using the supporting elements of the chair, or uprights, as lateral thrust elements to insert the strips or cross-pieces which join them. The ends of the strips are glued in advance since they will be constrained in the appropriate seatings made on the lateral uprights. These uprights are thrust one towards the other, possibly keeping one of the two stationary, so as to achieve a connected and constrained structure, forming either a front half-frame of the chair, without lateral cross-pieces, or a rear half-frame of the chair or back-piece. In order to do this, these conventional machines need to be equipped with a vast range of molds or templates, constructed specifically for each individual type of chair. First of all, this causes a considerable waste of time for setting up the machine as the type of chair to be worked varies, and at the same time a considerable stock of molds is required to satisfy the different needs of said machines. Both the long setting-up time and the need for a large stock of templates are negative elements which affect the unit production cost of the chair.

Moreover, conventional clamping machines do not automatically complete the assembly of the chair, but achieve automatically only the two half-frames of the chair which then have to be assembled together, generally manually. For example, the joining together of the two half-frames, front and rear, is achieved either by manually connecting the half-frames with suitable lateral strips, or possibly with the aid of a third machine which automatically joins together the rear half-frame and the front half-frame.

As explained, the automation known in the specific field of assembling chairs with wooden structures entails either the use of at least two machines operating in line in order to be able to completely assemble a chair, or the manual intervention of an operator to be able to join the front part to the rear part of the chair.

In both these cases, the conventional solutions entail high production costs, since they need a considerable intervention by the operators both to set up the machines and also to complete the production of the chair. Moreover, the quality of the final product is not always satisfactory.

The Applicants have devised and embodied the present invention to overcome these shortcomings of the state of the art, and to obtain further advantages.

### SUMMARY OF THE INVENTION

The present invention is set forth and characterized essentially in the main claims, while the dependent claims describe other innovative characteristics of the present invention.

One purpose of the present invention is to achieve an apparatus which automates the step of clamping wooden elements or other material which make up the chair, and the step of complete assembly of the chair itself, and which makes these steps quicker and more economical.

Another purpose is to further automate the step of assembling the chair, and to make it unnecessary to use molds or templates for setting up the clamping machines.

Another purpose is to avoid using a third automatic machine to join the front half-frame and the rear half-frame of the chair, and to reduce to a minimum a possible manual intervention by an operator, so as to make the apparatus of automatic machines safer for the operator and, at the same time, to ensure technical consistency and quality of the finished product to the highest degree.

It is also a purpose of the present invention to perfect a method for the automatic assembly of chairs consisting of wooden elements and/or other suitable material, which will reduce to a minimum the manual intervention of operators during the assembly steps.

In accordance with these purposes, the automated apparatus for assembling constructional components of a furnishing element according to the present invention comprises at least a first automatic machine provided with first thrust means able to act in a first direction, for example horizontal, on a first part of the constructional components, for example in the case of a chair, the two front legs and the front cross-pieces, and second thrust means able to act in a second direction, at an angle with respect to the first, on a second part of the components, such as for example the lateral cross-pieces.

According to a characterizing feature of the present invention, the first thrust means comprise two first supporting elements able to slide simultaneously in reciprocally opposite directions, by means of first movement means provided with a single drive member.

This first machine can be for example equipped to achieve a first half-frame of the furnishing element to be assembled, or it can complete the assembly of the frame of the furnishing element.

The apparatus also provides a second machine arranged downstream of the first machine and operating in line therewith; it can be prepared and set up both to form a second half-frame of the furnishing element, and to assemble the two half-frames together.

The second thrust means advantageously comprise inclinable elements hinged on the first supporting elements and able to be rotated, by means of a rotation assembly, between a first loading position, wherein they are substantially parallel to the first direction, and a second assembly position, wherein they are substantially aligned with the second direction. The second part of the components is able to be thrust by second adjustment means able to slide longitudinally along the inclinable elements by means of a second movement assembly.

The second machine comprises third and fourth thrust means.

To be more exact, the third thrust means are able to act in the first direction on the components which form the second half-frame, while the fourth thrust means are able to thrust the first half-frame, formed by the first machine, against the second half-frame, so as to form the furnishing element.

In accordance with a preferential form of embodiment, the first movement means comprise, as explained, a single drive member which, by means of an intermediate assembly consisting of conical toothed wheels, rotates two screw elements simultaneously, the screw elements being coupled with mating bushes which are mounted on the first supporting elements.

The rotation assembly comprises a substantially hollow lower part hinged on a corresponding first supporting element, a screw element arranged axially to the lower part and hinged on a corresponding inclinable element, and a drive member which selectively rotates a nut element screwed onto the screw element.

The third thrust means comprise two second supporting elements reciprocally movable one towards the other in the first direction, by means of a third movement assembly, so as to assemble the second half-frame.

Both the first and the second and the third thrust means comprise adjustment elements able to allow to attach any type of constructional element whatsoever, irrespective of its shape or the design of the furnishing element.

The fourth thrust means comprise a press element movable by means of a fourth movement assembly in the second direction, and by means of which it is possible to attach the first half-frame to the second machine, so as to form the chair.

According to a variant of the present invention, there is a possible automatic assembly to move the half-frame from the first to the second machine.

In accordance with another preferential form of embodiment, the automated apparatus for assembling chairs according to the present invention is connected to a command and control unit to coordinate the steps of assembling the components of the chair. This command and control unit can consist for example of a PLC processor, with numeric control or suchlike.

Thanks to the adjustment elements, it is possible to eliminate any sample mold or set-up template. Moreover, it is possible to provide to use conventional positioning programming systems, or simple abutments adjustable within suitable sliding eyelets. In this way the stock of molds or templates is completely eliminated, and at the same time the time taken to set up the machines is greatly reduced.

The first and second machine which constitute the apparatus according to the present invention can work in coordination and cooperation together or independently, both in the production of different chairs and also in the production of the same chair in the event that there are different rhythms and production times.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 shows an automated apparatus for assembling chairs according to the present invention;
- fig. 2 is a prospective view of a front half-frame of a chair consisting of wooden elements made with a first machine which is part of the apparatus in fig. 1;
- fig. 3 is a prospective view of a rear half-frame, or back-rest, of a chair consisting of wooden elements and made with a second machine which is part of the apparatus in fig. 1;
- fig. 4 is a schematic view from above of the front structural elements of a chair, and the way in which they are clamped together, indicating the directions in which they are assembled;
- fig. 5 is a schematic view from above of the structural elements of the back-rest of the chair, indicating the direction in which it is assembled;

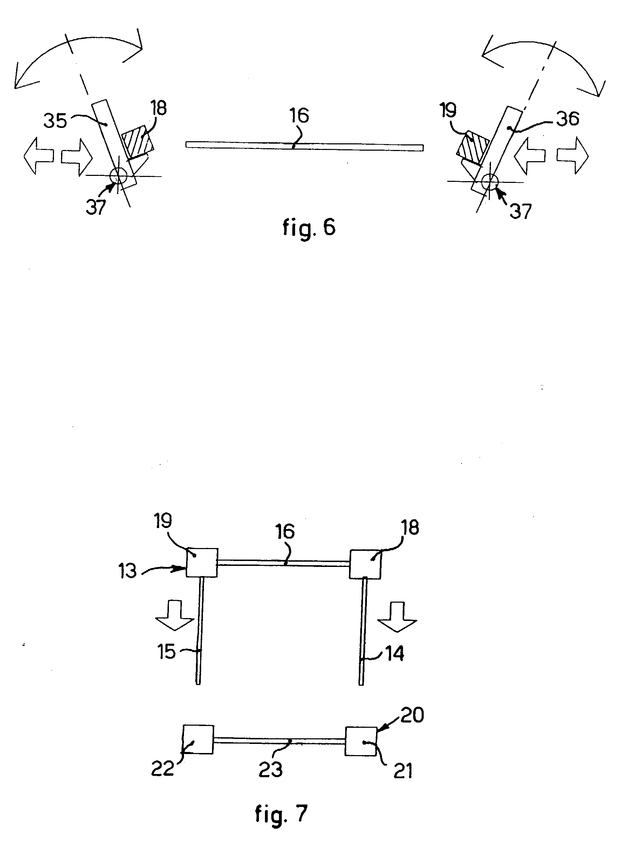

- fig. 6 is a schematic view from above of an operating step of one of the two automatic machines of the apparatus in fig. 1;
- fig. 7 is a schematic view from above of how the preassembled elements of the back-rest and of the front part of the chair are clamped together by the second automatic machine;
- fig. 8 is a partly sectioned front view of the first automatic machine of the apparatus in fig. 1;
- fig. 9 shows a first operative step of the machine in fig. 8;
- fig. 10 shows a second operative step of the machine in fig. 8;

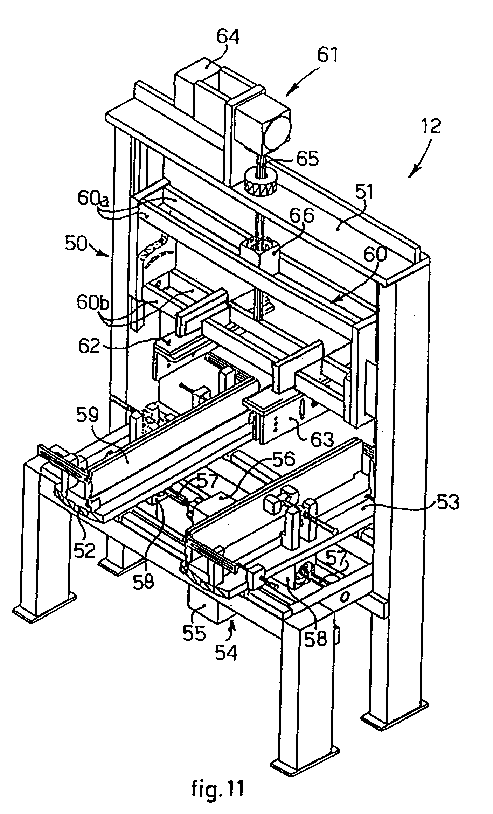

- fig. 11 is a schematic three-dimensional view of the second automatic machine of the apparatus in fig. 1.

### DETAILED DESCRIPTION OF A PREFERENTIAL FORM OF EMBODIMENT OF THE INVENTION

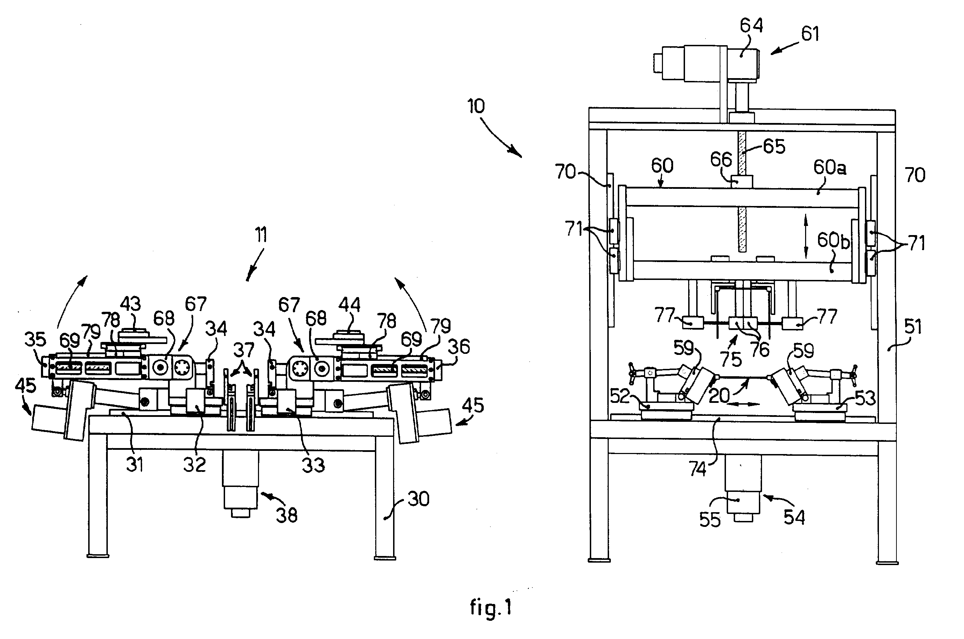

With reference to fig. 1, an automated apparatus 10 according to the present invention is applied to assemble wooden chairs, and comprises a first machine 11 cooperating in coordination and in line with a second machine 12.

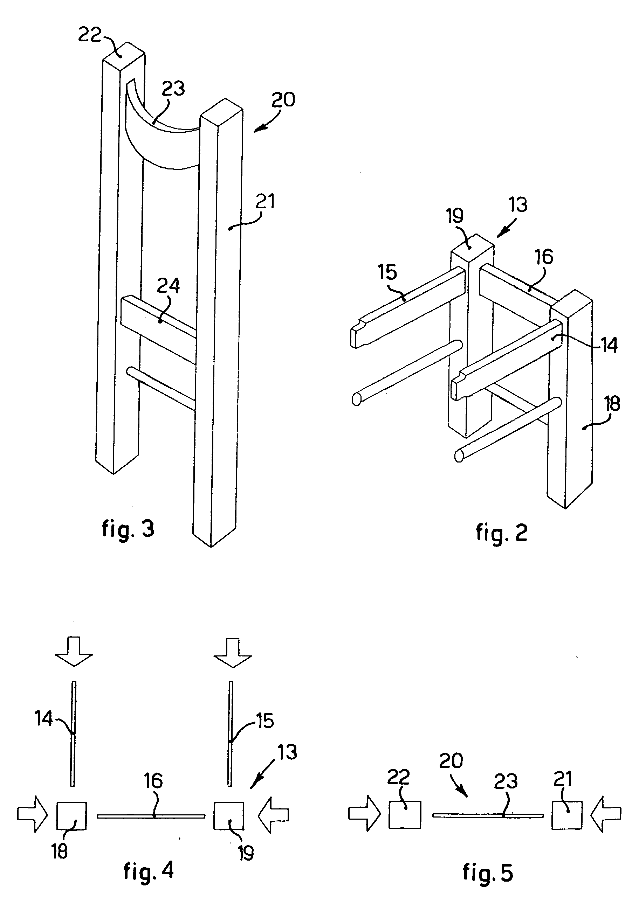

The first machine 11 is able to automatically assemble and clamp a first half-frame 13 of the chair to be assembled (fig. 2), formed substantially by lateral cross-pieces, or strips, respectively right 14, left 15 and front 16, and by front legs 18 and 19.

The second machine 12 is able to automatically assemble and clamp a second half-frame 20 (fig. 3), which comprises two rear legs 21 and 22 and two rear cross-pieces or strips 23 and 24, the latter able to form the back-rest. This second machine 12 is also able to join together the second half-frame 20 to the first half-frame 13, previously assembled with the first machine 11.

The first machine 11 comprises a base frame 30 on which is mounted a substantially horizontal transverse sliding guide 31. Two lateral supporting assemblies 32 and 33 are able to reciprocally slide on said guide 31, and respective inclinable columns 35 and 36 are hinged on said supporting assemblies 32 and 33, able to assume the inclination at which the lateral cross-pieces 14 and 15 are assembled with the front legs 18 and 19 of the chair to be assembled.

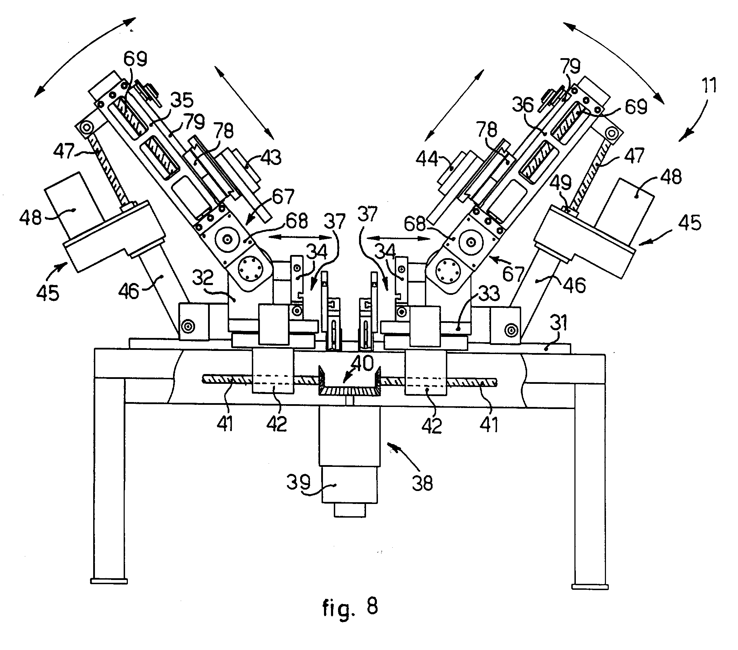

The reciprocal sliding of the two lateral supporting assemblies 32 and 33 is achieved by a first movement assembly 38 (fig. 8) comprising, in this case, an electric motor 39, for example of the step-by step type, able to rotate an intermediate assembly of conical wheels 40, which simultaneously moves two screws 41. Each of these screws 41 cooperates with respective nuts 42 which, being disposed on the lower part of the lateral supporting assemblies 32 and 33, move the latter reciprocally nearer to or farther from a central axis of the machine 11.

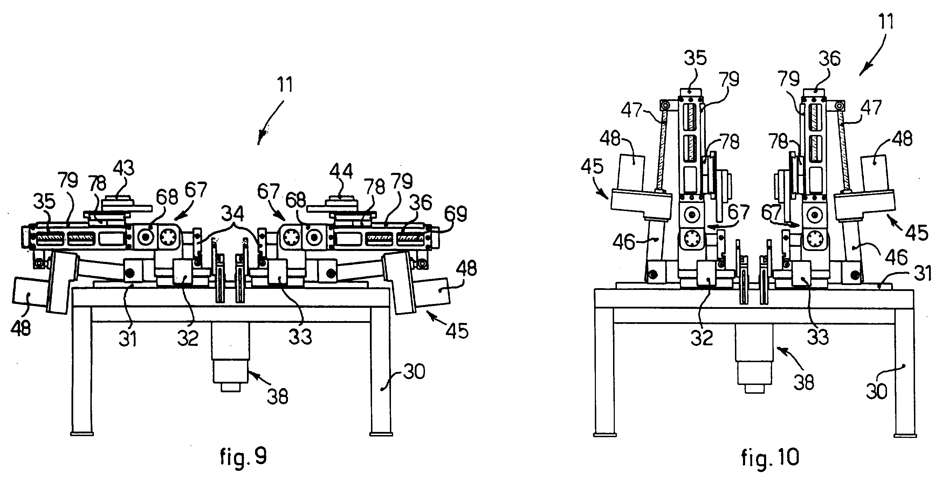

The inclinable columns 35 and 36 are able to be rotated, by means of a respective rotation assembly 45, between a first loading position (fig. 9), wherein they are substantially horizontal, and a second assembly position (fig. 10), wherein they are inclined according to the inclination useful for the assembly of the cross-pieces 14 and 15, with respect to the corresponding front legs 18 and 19. In this case, the assembly position of the columns 35 and 36 is substantially perpendicular to the loading position, since the transverse section of the legs 18 and 19 and the positioning of the corresponding cross-pieces 14, 15 and 16 with respect thereto is substantially orthogonal.

To be more exact, as shown in fig. 8, each rotation assembly 45, provided for rotating the columns 35 and 36, comprises a hollow lower wall 46 hinged on the corresponding supporting assemblies 32, 33, a screw element 47 arranged axially to the lower part 46 and hinged on the corresponding column 35, 36, and a servomotor 48 able to selectively rotate a nut 49 screwed onto the screw element 47. In this way, by activating the servomotor 48, in one direction or the other, the screw element 47 is moved linearly, either towards the inside of the lower part 46, or towards the outside of this lower part 46, thus causing the respective columns 35 and 36 to rotate.

A plurality of first adjustment elements 37, of universal type, are provided on the frame 30 and are able to attach and position the front blocks 16, according to the type of chair and assembly to be performed, and without the aid of specific templates. In the same way, on each of the inclinable columns 35 and 36 there are second adjustment elements 43 and 44 able to attach and position the lateral blocks 14 and 15, according to the type of chair and assembly to be made. On each of the supporting assemblies 32 and 33 there are a plurality of other adjustment elements 34, able to attach and position the front legs 18 and 19, according to the type of chair and assembly to be made, and without the aid of specific templates.

The second adjustment elements 43 and 44 are also able to slide longitudinally, by means of a second movement assembly 67, along the respective inclinable columns 35 and 36, so as to take the lateral blocks 14 and 15 from a loading position, wherein the latter are kept distant from the respective front legs 18 and 19, and the columns 35 and 36 are in the loading position, to an assembly position, wherein the blocks 14 and 15 are thrust towards the corresponding legs 18 and 19 in order to determine the coupling thereof, and the columns 35 and 36 are in the assembly position.

The second movement assembly 67 comprises an electric motor 68, for example of the step-by-step type, able to rotate respective screws 69 which by means of nuts, not visible in the drawings, connected to the respective adjustment elements 43, 44, translate the latter longitudinally. The translation of the adjustment elements 43, 44 is achieved by means of sliders 78 able to slide on respective linear guides 79, of a conventional type and not described in any detail here.

Once loaded with the respective blocks 14, 15 and 16, and the respective legs 18 and 19, the first machine 11 performs the automatic assembly of the first half-frame 13, first simultaneously thrusting the legs 18 and 19 against the front block 16, causing such legs 18 and 19 to be constrained, with a reciprocal movement actuated by the first movement assembly 38. Then, once the columns 35 and 36 have been positioned in the second direction, the first machine 11 thrusts the respective lateral blocks 14 and 15, by means of the second adjustment elements 43 and 44 driven by the second movement assembly 67, against the respective seatings of the front legs 18 and 19.

According to a variant, the columns 35 and 36 are positioned in the assembly position, the lateral blocks 14 and 15 are inserted into the front legs 18 and 19 by means of the second movement assembly 67 and, by means of the first movement assembly 38, the front legs 18 and 19 are reciprocally thrust against the lateral ends of the front block 16.

At this point the first half-frame 13 of the chair is assembled and is handled manually or automatically to be mounted on the second machine 12.

This second machine 12 comprises a second supporting frame 51 on which are mounted, able to slide, a press element 50 and two lateral supporting assemblies 52 and 53, reciprocally movable on a linear guide 74.

The reciprocal sliding of the two lateral supporting assemblies 52 and 53 is achieved by a third movement assembly 54 comprising, in this case, an electric motor 55, for example of the step-by-step type, able to rotate an intermediate assembly of conical wheels 56, which moves two screws 57 simultaneously. Each of these screws 57 cooperates with respective nuts 58 which, being disposed on the lower part of the lateral supporting assemblies 52 and 53, determine the reciprocal movement of the latter, nearer to or farther from a central axis of the machine 12.

On each of the supporting assemblies 52 and 53 a plurality of third adjustment elements 59 are provided, able to attach and position the rear legs 21 and 22, and the rear blocks 23 and 24, according to the type of chair and assembly to be made, and without the aid of specific templates.

The press element 50 is able both to allow to clamp the first half-frame 13 to the second machine 12, and also to thrust said half-frame 13 towards the second half-frame 20, so as to assemble the chair; it comprises a central structure 60 moved vertically, by means of a fourth movement assembly 61, and able to slide linearly with respect to the supporting frame 51 by means of linear guides 70 on which sliders 71 slide, mounted on the central structure 60 itself.

Said central structure 60 comprises four horizontal beams, respectively two upper beams 60a and two lower beams 60b. The lower beams 60b are able to be rotated independently with respect to the central structure 60, remaining substantially parallel to the upper beams 60a. On the lower beams 60b two jaws are also arranged, respectively a fixed jaw 62 and a movable jaw 63, individually adjustable, able to keep the first half-frame 13 in a position suitable for the total assembly of the chair. Said jaws 62 and 63 can be rotated around the median axis of the second machine 12, so as to clamp and selectively allow the assembly of every type of chair without having to have recourse to the use of templates or suchlike. To be more exact, the first half-frame 13 is attached with the front legs 18 and 19 upwards, so as to arrange the lateral cross-pieces 14 and 15 facing downwards in a vertical direction, that is, towards the respective rear legs 21 and 22 attached to the supporting assemblies 52 and 53 by means of the third adjustment elements 59.

The fourth movement assembly 61 comprises a drive member 64 able to rotate a screw 65 which is screwed, by means of a threaded nut 66 mounted on the upper beam 60a, to the central structure 60, so as to determine a vertical movement of the latter.

A centering device 75 is also associated with said central structure 60 and is provided with a first pair of linear actuators 76 arranged in correspondence with the median axis of the second machine 12, and able to thrust the lateral cross-pieces 14 and 15 of the first half-frame 13 towards the outside, and with a second pair of linear actuators 77 arranged in specular manner outside the jaws 62, 63, and able to thrust the lateral cross-pieces 14 and 15 of the first half-frame 13 towards the inside.

In this way, by proportioning the forces of the two pairs of actuators 76 and 77, the accuracy of assembling the first half-frame 13 and the second half-frame 20 is facilitated and increased.

Once the legs 21 and 22 and the respective cross-pieces 23 and 24 have been positioned, the third movement assembly 54 takes the lateral supporting assemblies 52 and 53 into reciprocal proximity or distance, thus causing the ends of the cross-pieces 23 and 24 to be constrained within the respective seatings of the legs 21 and 22, and the consequent formation of the second half-frame 20.

Previously, as explained, the first half-frame 13, assembled by the first machine 11, is clamped by the jaws 62 and 63, and subsequently thrust vertically by the press element 50 towards the second half-frame 20, so as to constrain the two together and consequently define the complete frame of the chair which is thus ready for the subsequent finishing steps.

All the movement assemblies 38, 54, 61 and 67, the centering device 75 and the jaws 62 and 63, provided on the two machines 11 and 12, are of the command type and are managed by automatic computering and programming systems programs of a conventional type, not shown in the drawings.

To maintain the stability of the frame of the chair thus assembled, the coupling seatings of the various elements are glued automatically and in advance, with suitable gluing devices of a conventional type, and/or manually. This operation is an accessory to the subject matter of the present invention.

It is clear however that modifications and/or additions of parts may be made to the apparatus 10 as described heretofore, but these shall remain within the field and scope of the present invention.

It is also clear that, although the present invention has been described with reference to specific examples, a person of skill shall certainly be able to achieve many other equivalent forms of automated apparatus for assembling chairs and the relative assembly method, all of which shall come within the field of protection of the present invention.

## Claims

1. Automated apparatus for assembling constructional components of a furnishing element comprising at least a first machine (11) provided with first thrust means (32, 33) able to act in a first direction on a first part (16, 18, 19) of said constructional components, and second thrust means (43, 44) able to act in a second direction, angled with respect to said first direction, on a second part (14, 15) of said components, **characterized in that** said first thrust means comprise two first supporting means (32, 33) able to slide simultaneously in reciprocally opposite directions, by means of a first movement assembly (38).

2. Apparatus as in claim 1, **characterized in that** said first movement assembly (38) comprises a single drive member (39) able to rotate an intermediate assembly (40) which is able to simultaneously move two screw elements (41), each of which cooperates with a mating nut element (42) mounted on each of said first supporting means (32, 33), in order to achieve a first half-frame (13) of said furnishing element.

3. Apparatus as in claim 1 or 2, **characterized in that** said first supporting means comprise a pair of supporting assemblies (32, 33) able to slide on first guide means (31).

4. Apparatus as in claim 2 or 3, **characterized in that** said first machine (11) further comprises a plurality of adjustable positioning elements (34, 37) able to allow the correct positioning of said first part (16, 18, 19) of said components and their assembly in said first direction, irrespective of the type of constructional components or of the furnishing element to be assembled.

5. Apparatus as in claim 1, **characterized in that** said second thrust means (43, 44) are mounted on respective inclinable elements (35, 36), hinged on one of said first supporting means (32, 33) and able to be rotated between a first loading position, wherein said inclinable elements (35, 36) are substantially parallel to said first direction so as to allow the easy loading of said second part (14, 15) of components, and a second assembly position, wherein said inclinable elements (35, 36) are substantially aligned with said second direction.

6. Apparatus as in claim 5, **characterized in that** said second thrust means comprise second adjustment elements (43, 44), able to slide longitudinally by means of second guide means (79) with respect to said inclinable elements (35, 36) by means of a second movement assembly (67) and able to thrust said second part (14, 15) of components towards said first part (16, 18, 19) of components so as to achieve said first half-frame (13).

7. Apparatus as in claim 6, **characterized in that** said second movement assembly (67) comprises an electric motor (68) able to rotate respective screw elements (69) which are connected by means of nut elements to said adjustment elements (42, 43), in order to allow the longitudinal translation thereof.

8. Apparatus as in claim 6, **characterized in that** said rotation of said inclinable elements (35, 36) is actuated by means of corresponding rotation assemblies (45), and that each of said rotation assemblies (45) comprises a substantially hollow lower part (46) hinged on a corresponding one of said first supporting means (32, 33), a screw element (47) arranged axially to said lower part (46) and hinged to a corresponding one of said inclinable elements (35, 36), and a drive member (48) able to selectively rotate a nut (49) screwed onto said screw element (47).

9. Apparatus as in claim 2, **characterized in that** at least a second machine (12) is arranged downstream and in line with said first machine (11) and comprises third thrust means (52, 53) able to act in said first direction on a third part (21, 22, 23, 24) of said components in order to achieve a second half-frame (20) of said furnishing element.

10. Apparatus as in claim 9, **characterized in that** said second machine (12) comprises fourth thrust means (50) able to thrust said first half-frame (13) against said second half-frame (20) in order to achieve the association of the two half-frames (13, 20) so as to form said furnishing element.

11. Apparatus as in claim 9 or 10, **characterized in that** said third thrust means comprise two second supporting means (52, 53) able to slide simultaneously on third guide means (74) in reciprocally opposite directions, by means of a third movement assembly (54).

12. Apparatus as in claim 11, **characterized in that** said third movement assembly (54) comprises a single drive member (55) able to rotate an intermediate assembly (56) which is able to simultaneously move two screw elements (57), each of which is able to cooperate with a nut element (58) mounted on each of said second supporting means (52, 53).

13. Apparatus as in claim 11 or 12, **characterized in that** each of said second supporting means (52, 53) comprises a plurality of adjustable positioning elements (59), able to allow the correct positioning of said third part (21, 22, 23, 24) of said components, and their assembly in said first direction, irrespective of the type of constructional components or furnishing element to be assembled.

14. Apparatus as in claim 10, **characterized in that** said fourth thrust means (50) comprise a central structure (60) able to move vertically with respect to a supporting frame (51) by a fourth movement assembly (61), said central structure (60) being provided with sliding elements (71) able to slide on relative fourth guide means (70) mounted on said supporting frame (51), and being able to support at least two jaws (62, 63) able to keep said first half-frame (13) in a position suitable for the definitive assembly of said chair.

15. Apparatus as in claim 14, **characterized in that** said fourth movement assembly (61) comprises a drive member (64) able to rotate a screw element (65) which is screwed to the central structure (60) by means of a nut element (66).

16. Method for assembling constructional components of furnishing elements, comprising a first step wherein, by means of first thrust means (32, 33) mounted on a first machine, a first part (16, 18, 19) of said components is assembled, acting in a first direction, and a second step wherein, by means of second thrust means (43, 44) mounted on said first machine (11), a second part (14, 15) of said components is assembled acting in a second direction, angled with respect to said first direction, **characterized in that** in said first step, said first components (16, 18, 19) are arranged in cooperation with first supporting means (32, 33) of said first thrust means, able to slide simultaneously in reciprocally opposite directions, by means of a first movement assembly (38).

17. Method as in claim 16, **characterized in that** by means of said first two steps a first half-frame (13) of said furnishing element is achieved.

18. Method as in claim 17, **characterized in that** it comprises a third step wherein, by means of third thrust means (52, 53) mounted on a second machine (12) arranged downstream of said first machine (11), a third part (21, 22, 23, 24) of said components is assembled acting in said first direction, so as to achieve a second half-frame (20) of said furnishing element.

19. Method as in claim 18, **characterized in that** it comprises a fourth step wherein, by means of fourth thrust means (50) mounted on said second machine (12), said first half-frame (13) is thrust against said second half-frame (20) so as to achieve the association of the two half-frames (13, 20) and define said furnishing element.
